# EUROPEAN PATENT SPECIFICATION

(11) **EP 1 918 030 B1**
(45) Date of publication and mention of the grant of the patent: **18.05.2011**
(21) Application number: 07119566.3
(22) Date of filing: 30.10.2007
(51) Int. Cl.: B08B 3/02, B60S 3/00, B65G 19/02

(54) **Apparatus for washing wheeled objects or objects on wheels**
Vorrichtung zur Reinigung von Gegenständen mit oder auf Rädern
Appareil pour le lavage d'objets à ou sur roulettes

(30) Priority: 31.10.2006 IT UD20060232
(43) Date of publication of application: 07.05.2008
(73) Proprietor: STEELCO SPA, 31039 Riese Pio X (IT)
(72) Inventor: Zardini, Fabio, 31033, Castelfranco Veneto (TV) (IT)
(74) Representative: Petraz, Gilberto Luigi

(56) References cited:
- EP-A- 1 153 813
- US-A- 3 096 775
- US-A- 3 698 029

## Description

### FIELD OF THE INVENTION

The present invention concerns an apparatus for washing trolleyed objects, for example trolleys, beds, bedside tables, other equipment provided with wheels, and objects in general disposed on specially provided trolleys, in a washing chamber, for example of the type used in the hospital sector, or in catering for washing self-service trolleys, or those used on airplanes. Here and hereafter, washing chamber is intended as a chamber wherein the trolleyed objects can undergo one of the following treatments: pre-washing in cold and/or hot water, hot water washing advantageously with detergents, and heat-disinfection, with a possible final drying.

### BACKGROUND OF THE INVENTION

Chambers, for example those used in hospitals or laboratories, for washing reusable equipment, such as trolleys, beds and similar trolleyed equipment provided with wheels, are known.

Known washing chambers are normally provided with an entry opening, through which the dirty equipment, or equipment to be washed, is introduced, and with a loading surface, for example a grid, on which the dirty equipment is pushed.

Known washing chambers are also provided with nozzles for delivering cold and/or hot water sprays, which, with the help of suitable detergents, allow, for example, to wash the dirty equipment disposed on said surface. In such washing chambers it is also possible to perform heat-disinfection by means of superheated water.

The washed equipment is then extracted through an exit opening, which normally faces a zone separated from the entry zone of the dirty equipment, so as to avoid contact or contamination between dirty equipment and washed equipment.

However, all the operations to insert the dirty equipment and extract the washed equipment are performed manually by specialized operators. This entails both prolonged contact with dirty or infected equipment for the operators and long loading and unloading times for each piece of equipment and also the fact that operators are forced to enter the washing chamber.

US-A-3,698,029, which is considered as the closest prior art discloses an apparatus for washing trolleyed objects in accordance with the preamble of claim 1. US-A-3.096.755 discloses a washing apparatus with an inclined frame.

Purpose of the present invention is to achieve an apparatus for washing trolleyed objects in a washing chamber that allows to automate at least the operations to insert and/or extract the trolleyed objects, respectively, into and out of the washing chamber, reducing both loading and unloading times for each object and the interventions of operators, advantageously without the operators being obliged to enter the washing chamber, and wherein the washing liquid is facilitated to drain from the trolleyed object.

The Applicant has devised, tested and embodied the present invention to overcome the shortcomings of the state of the art and to obtain these and other purposes and advantages.

### SUMMARY OF THE INVENTION

The present invention is set forth and characterized in the independent claim 1, while the dependent claims describe other characteristics of the invention or variants to the main inventive idea.

In accordance with the above purpose, a washing apparatus according to the present invention comprises a washing chamber, inside which trolleyed objects, such as trolleys, beds, bedside tables, other equipment provided with wheels, and objects in general disposed on suitable trolleys, are able to be washed.

The washing apparatus according to the present invention also comprises two guides, substantially parallel to each other, on which the wheels of the trolleyed objects are able to be disposed and chain movement means provided with feed elements. The feed elements are associated with at least one of the two guides and are able to contact the wheels of the trolleyed objects so as to perform the selective insertion of the trolleyed objects from the outside towards the washing chamber or their extraction from the washing chamber towards the outside.

According to a characteristic of the present invention, the chain movement means associated with the washing chamber comprises a frame able to support at least the guides and the feed elements and able to be selectively inclined with respect to a base of the washing chamber, in order to allow the washing liquid to drain at least from the trolleyed object to the base.

According to the present invention, the washing apparatus selectively allows to insert or extract the trolleyed objects with respect to the washing chamber in a completely automatic manner, reducing or eliminating the interventions of operators and also reducing the insertion/extraction time of the objects, advantageously without obliging the operators to enter the washing chamber.

According to an advantageous solution of the present invention, each guide is defined by a respective pair of longitudinal side panels, wherein the distance between the longitudinal side panels of a first of the guides is greater than the distance between the longitudinal side panels of a second of the guides.

In this way, the present invention allows to automatically insert/extract with respect to the washing chamber trolleyed objects with different gauges.

Advantageously, the narrowest guide acts as a lead-in and reference for the wheels of the trolleyed object, wheels that are disposed aligned with each other on the same side of the object.

According to this solution, the apparatus advantageously comprises an inclination device provided at least with a rotating shaft and a cam element, mounted on the rotating shaft, in which, according to the angular position of the rotating shaft, the cam element is able to cooperate with the frame so as to permit its selective inclination.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 is a plane and partially sectioned view of a washing apparatus according to the present invention;
- fig. 2 is a plane and partially sectioned view of an intermediate movement device of the washing apparatus in fig. 1;
- fig. 3 is a front view of the intermediate movement device in fig. 2, in a first condition of use;
- fig. 4 is a front view of the intermediate movement device in fig. 2, in a second condition of use;
- fig. 5 is a longitudinal section of a detail of the intermediate movement device in fig. 2.

### DETAILED DESCRIPTION OF A PREFERENTIAL FORM OF EMBODIMENT

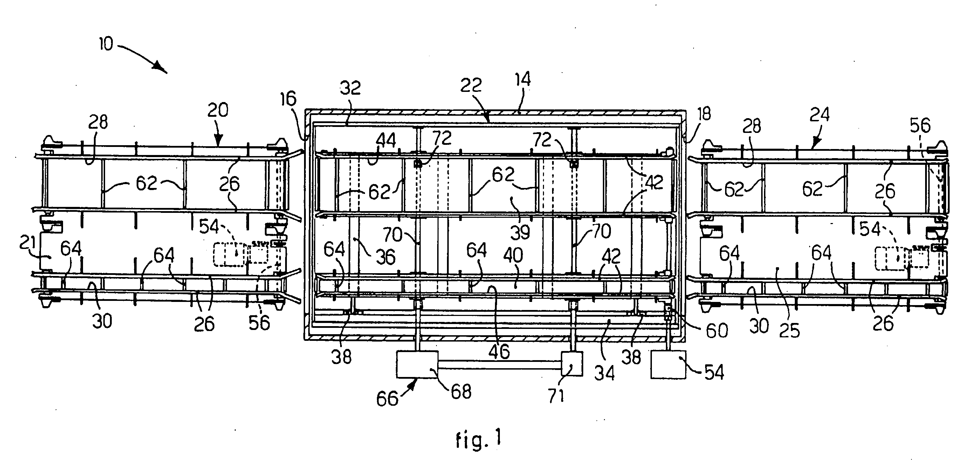

With reference to fig. 1, a washing apparatus 10 according to the present invention can be used, for example, in the hospital sector, to wash trolleyed equipment 12.

The washing apparatus 10 comprises a washing chamber 14, provided with an entry opening 16 through which, from a first zone, the dirty equipment 12 is introduced, and an exit opening 18 through which the washed equipment 12 is extracted towards a second zone.

The washing apparatus 10 also comprises three movement devices, respectively first, or entry, 20, second, or intermediate, 22 and third, or exit 24.

The entry device 20 is disposed in the first zone, the intermediate device 22 in the washing chamber 14 and the exit device 24 in the second zone.

Each entry 20 and exit 24 device comprises a loading surface, 21 and 25, respectively, solid with respect to the floor of the first zone and the second zone.

Each entry 20 and exit 24 device also comprises two pairs of longitudinal side panels 26 substantially parallel to each other.

Each pair of longitudinal side panels 26 defines two respective guides, or lanes, respectively first 28 and second 30.

The intermediate device 22 (figs. 1, 2 and 3) comprises a first, main frame, 32, solid with a base 34 of the washing chamber 14 and a second frame 36 hinged to the first frame 32 by means of two hinges 38.

Two longitudinal surfaces 39 and 40, advantageously of the grid type, are fixed to the second frame 36, each of which is delimited laterally by a pair of longitudinal side panels 42 that define two respective lanes, respectively first 44 and second 46.

The lanes 28, 30, 44 and 46 of each of the three movement devices 20, 22 and 44 are suitable to house the equipment 12 slidingly, in particular wheels 48 of the equipment 12.

In particular, the first lanes 28 and 44 of the three devices 20, 22 and 24 have a width greater than the corresponding second lanes 30 and 46.

In this way, each movement device 20, 22 and 24 can house equipment 12 with an extremely variable gauge, or distance between the wheels 48, front, or rear.

The three movement devices 20, 22 and 24 (fig. 1) are reciprocally disposed so that both the first lanes 28 and 44 and also the second lanes 30 and 46 are aligned with each other.

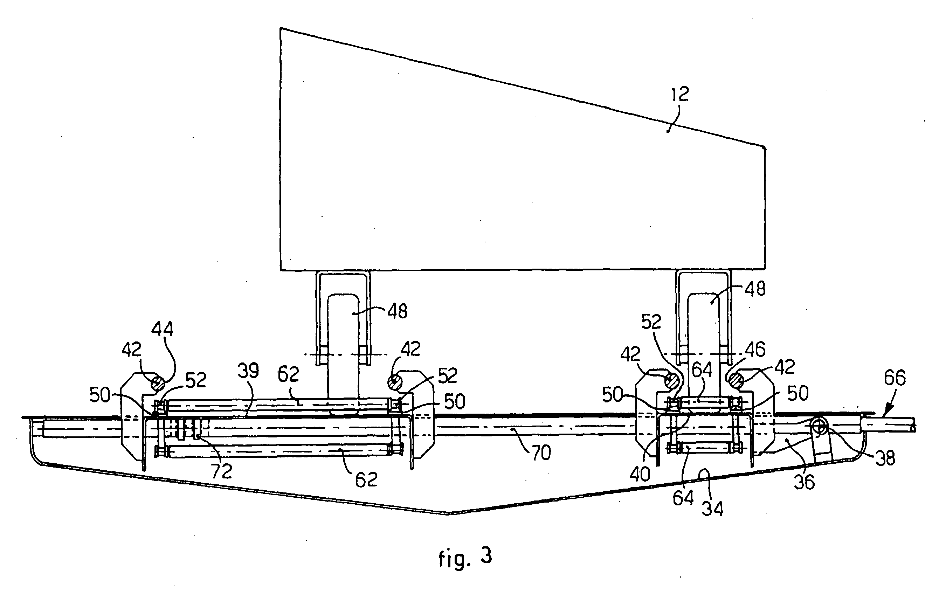

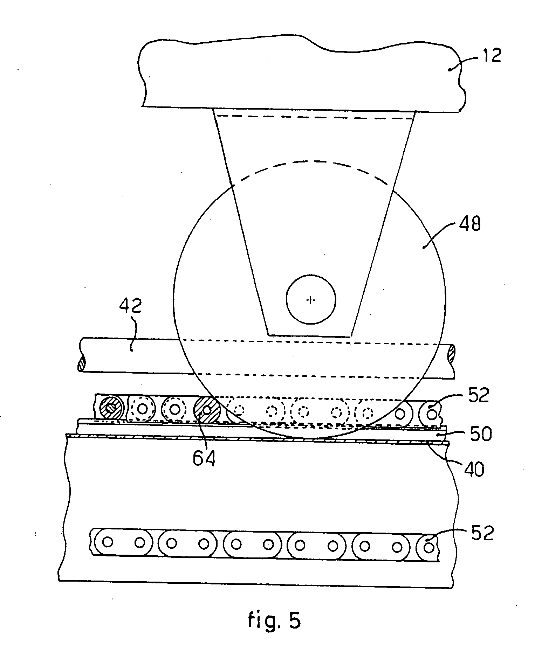

Each movement device 20, 22 and 24 also comprises, associated with each longitudinal side panel 26, 42 and solid with respect to the respective surface 21, 25, 39 and 40, a guide, or rail, 50 and a chain 52 (figs. 3, 4 and 5).

The chain 52 is able to slide on the respective guide 50, advantageously made of or coated with anti-wear and/or self-lubricant material, such as for example teflon®, or delrin®, and is maintained in tension by means of toothed pulleys, not shown and of the known type, disposed at least in the lower part of the respective surface 21, 25, 39 and 40.

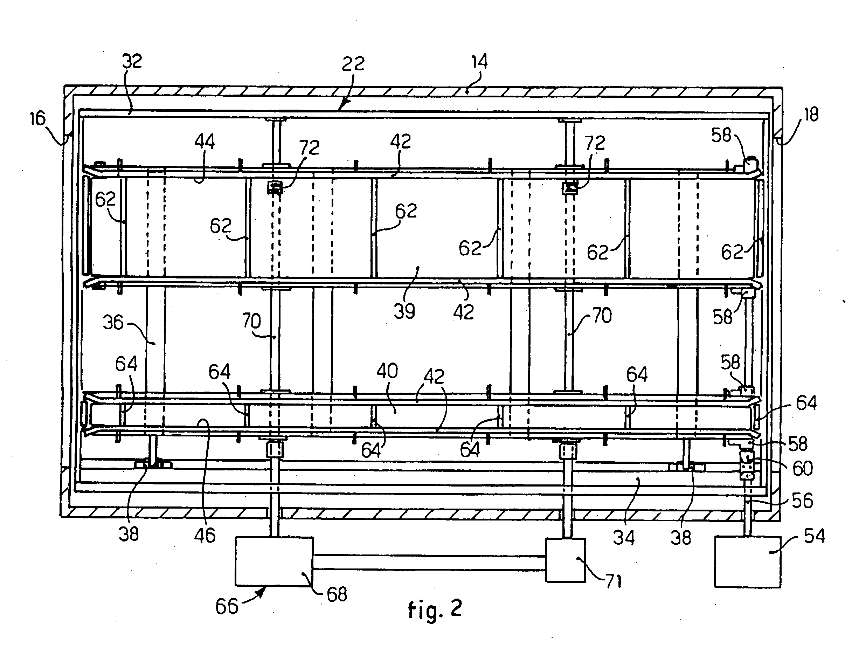

Each movement device 20, 22 and 24 (figs. 1 and 2) also comprises an electric motor 54, a drive shaft 56, connected to the motor 54, and drive pulleys 58 mounted on the drive shaft 56 and able to engage with each chain 52.

The motor 54 of the intermediate device 22 is disposed outside the washing chamber 14 and is provided with a universal joint 60 (fig. 2), the use of which will be described hereafter.

Each movement device 20, 22 and 24 also comprises feed bars, respectively first feed bars 62 that transversely connect the two chains 52 of the first lanes 28 and 44 to each other, and second feed bars 64 that transversely connect the two chains 52 of the second lanes 30 and 46 to each other.

The feed bars 62 and 64 are disposed substantially orthogonal to a direction of feed of the equipment 12.

By positioning the equipment 12 on the surface 21 of the entry device 20 and driving the relative motor 54, the chains 52 move and with them the relative feed bars 62 and 64, which contact the wheels 48 making the equipment 12 advance towards the washing chamber.

By driving also the motor 54 of the intermediate device 22, when the front wheels 48 of the equipment 12 are thrust on the two surfaces 39 and 49 of the intermediate device 22, the relative feed bars 62 and 64 contact and move the equipment 12 forward inside the washing chamber 14.

Once the washing is finished, the motor 54 of the intermediate device 22 is reactivated so as to make the washed equipment 12 advance towards the exit opening 18. By driving the motor 54 of the exit device 24, when the front wheels 48 of the equipment 12 are thrust on the surface 25 of the device 24, the relative feed bars 62 and 64 contact and move the equipment 12 forward towards the second zone.

The present invention therefore allows to move in a completely automatic manner the equipment 12 with respect to the washing chamber 14 before and after washing, reducing or eliminating the interventions of operators and reducing the loading/unloading time for the equipment 12, advantageously without obliging the operators to enter the washing chamber 14.

The washing apparatus 10 also comprises an inclination device 66 (figs. 1, 2, 3 and 4), associated with the intermediate movement device 22 and provided with a motor 68 and with two rotating shafts 70, connected to the motor 68, for example through levers 71, in order to be rotated around their longitudinal axis.

The rotating shafts 70 are disposed inside the washing chamber 14 between the base 34 and the second frame 36, they are distanced from each other on the length of the two surfaces 39 and 40 and they are preferably parallel to each other and transverse, advantageously perpendicular, to the direction of feed of the equipment 12.

The inclination device 66 also comprises two cam elements 72, each mounted on the respective rotating shaft 70, in correspondence with an opposite end with respect to the hinges 38.

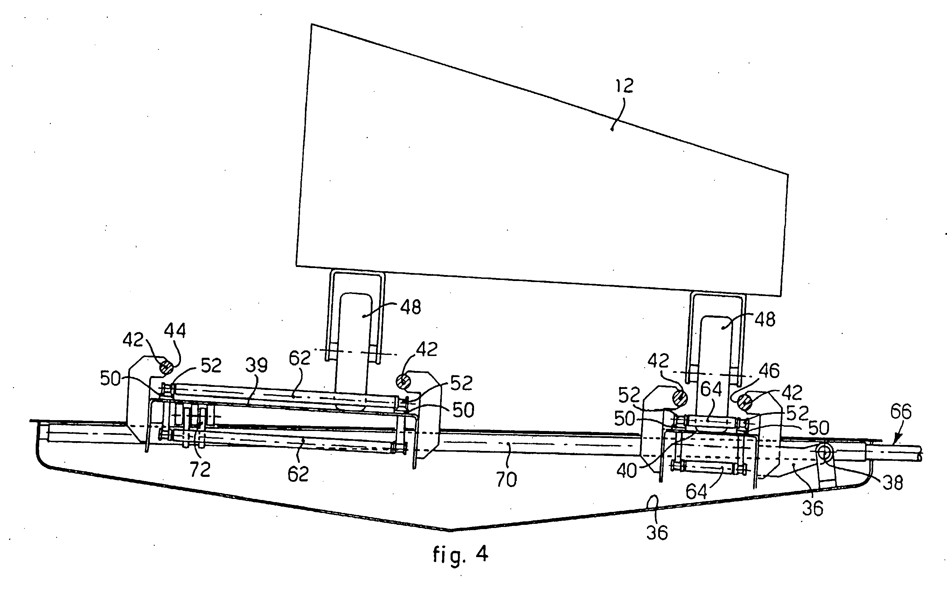

The two rotating shafts 70, made to rotate by the motor 68, are able to rotate the cam elements 72, which push the first surface 39, lifting it together with the second frame 36 with respect to the first frame 32 (fig. 4) along the hinging axis defined by the hinges 38.

The universal joint 60 on the drive shaft of the intermediate movement device 22 therefore allows to incline the second frame 36 keeping the chains 52 connected to the respective electric motor 54.

In this manner, it is possible to incline the second frame 36, allowing the washing liquid to drain from the equipment 12 and from the surfaces 39 and 40 towards the base 34.

It is clear that modifications and/or additions of parts may be made to the washing apparatus 10 as described heretofore, without departing from the scope of the present invention.

It is also clear that, although the present invention has been described with reference to some specific examples, a person of skill in the art shall certainly be able to achieve many other equivalent forms of apparatuses for washing trolleyed objects, having the characteristics as set forth in the claims and hence all coming within the scope of protection defined thereby.

## Claims

1. Apparatus for washing trolleyed objects (12) provided with wheels (48) comprising a washing chamber (14), at least two guides (28, 30, 44, 46) substantially parallel to each other on which said wheels (48) of said trolleyed objects (12) are able to be disposed, and chain movement means (20, 22, 24) provided with feed elements (62, 64), associated with at least one of said guides (28, 30, 44, 46) so as to selectively insert said trolleyed objects (12) from the outside towards said washing chamber (14) or extract said trolleyed objects (12) from said washing chamber (14) towards the outside, wherein said chain movement means (22) associated with said washing chamber (14) comprises a frame (36) able to support at least said guides (44, 46) and said feed elements (62, 64), **characterized in that** said frame is able to be selectively inclined with respect to a base (34) of said washing chamber (14), in order to allow a washing liquid to drain at least from said trolleyed object (12) towards said base (34), and **in that** said feed elements (62, 64) are able to contact said wheels (48) of said trolleyed objects (12).

2. Apparatus as in claim 1, **characterized in that** each of said guides (28, 30, 44, 46) is defined by a respective pair of longitudinal side panels (26, 42).

3. Apparatus as in claim 2, **characterized in that** the distance between the longitudinal side panels of a first of said guides (28, 44) is greater than the distance between the longitudinal side panels of a second of said guides (30, 46).

4. Apparatus as in claim 2 or 3, **characterized in that** said chain movement means (20, 22, 24) comprises a plurality of chains (52), each of which is associated with a respective longitudinal side panel (26, 42).

5. Apparatus as in claim 4, **characterized in that** said feed elements (62, 64) are mounted on respective pairs of chains (52).

6. Apparatus as in any claim hereinbefore, **characterized in that** said feed elements comprise bars (62, 64) disposed in a direction substantially orthogonal to a direction of feed of said trolleyed objects (12).

7. Apparatus as in claim 4 or 5, **characterized in that** said chain movement means (20, 22, 24) comprises at least a motor (54) kinematically connected, by means of a drive shaft (56), to said chains (52).

8. Apparatus as in any claim hereinbefore, **characterized in that** it also comprises an inclination device (66) provided with at least a rotating shaft (70) and with a cam element (72), mounted on said rotating shaft (70), wherein, according to the angular position of said rotating shaft (70), said cam element (72) is able to cooperate with said frame (36) so as to allow the selective inclination thereof.

9. Apparatus as in in any claim hereinbefore, **characterized in that** said frame (36) is hinged to said base (34) by hinging means (38).

10. Apparatus as in claims 7 and 8, **characterized in that** at least the drive shaft (56) of said chain movement means (22) associated with said washing chamber (14) is provided with a universal joint element (60), which allows the selective inclination of said frame (36).

## Patentansprüche

1. Einrichtung zum Waschen von mit Rollen (48) ausgestatteten rollbaren Objekten (12) mit einer Waschkammer (14), mit wenigstens zwei im Wesentlichen parallel zueinander ausgerichteten Führungen (28, 30, 44, 46), auf denen die Rollen (48) der rollbaren Objekte (12) positionierbar sind, und mit einem mit Zuführelementen (62, 64) ausgestatteten Kettenbewegungsmittel (20, 22, 24), das mit wenigstens einer der Führungen (28, 30, 44, 46) gekoppelt ist, um wahlweise die rollbaren Objekte (12) von außen in die Waschkammer (14) einzubringen oder die rollbaren Objekte (12) aus der Waschkammer (14) heraus nach außen zu überführen, wobei das mit der Waschkammer (14) gekoppelte Kettenbewegungsmittel (22) über einen Rahmen (36) verfügt, der dazu eingerichtet ist, wenigstens die Führungen (44, 46) und die Zuführelemente (62, 64) zu tragen, **dadurch gekennzeichnet, dass** der Rahmen dazu eingerichtet ist, wahlweise in Bezug auf ein Bodenteil (34) der Waschkammer (14) geneigt zu werden, um einer Waschflüssigkeit zu gestatten, wenigstens von den rollbaren Objekten (12) in Richtung des Bodenteiles (34) abzufließen, und dass die Zuführelemente (62, 64) dazu eingerichtet sind, die Rollen (48) der rollbaren Objekte (12) mechanisch zu kontaktieren.

2. Einrichtung nach Anspruch 1, **dadurch gekennzeichnet, dass** jede der Führungen (28, 30, 44, 46) durch ein Paar von längsseitigen Seitenwänden (26, 42) gebildet ist.

3. Einrichtung nach Anspruch 2, **dadurch gekennzeichnet, dass** der Abstand zwischen den längsseitigen Seitenwänden einer ersten Führung (28, 44) größer als der Abstand zwischen den längsseitigen Seitenwänden einer zweiten Führung (30, 46) ist.

4. Einrichtung nach Anspruch 2 oder 3, **dadurch gekennzeichnet, dass** das Kettenbewegungsmittel (20, 22, 24) über eine Anzahl von Ketten (52) verfügt, von denen jede mit einer zugeordneten längsseitigen Seitenwand (26, 42) gekoppelt ist.

5. Einrichtung nach Anspruch 4, **dadurch gekennzeichnet, dass** die Zuführelemente (62, 64) an zugeordneten Paaren von Ketten (52) angebracht sind.

6. Einrichtung nach einem der vorangehenden Ansprüche, **dadurch gekennzeichnet, dass** die Zuführelemente über Stäbe (62, 64) verfügen, die in einer im Wesentlichen rechtwinkligen Richtung in Bezug auf die Zuführrichtung der rollbaren Objekte (12) angeordnet sind.

7. Einrichtung nach Anspruch 4 oder 5, **dadurch gekennzeichnet, dass** das Kettenbewegungsmittel (20, 22, 24) über wenigstens einen Motor (54) verfügt, der mittels einer Antriebswelle (56) mit den Ketten (52) kinematisch gekoppelt ist.

8. Einrichtung nach einem der vorangehenden Ansprüche, **dadurch gekennzeichnet, dass** sie weiterhin über eine Neigevorrichtung (66) verfügt, die mit wenigstens einer Drehwelle (70) und mit einem an der Drehwelle (70) befestigten Nockenelement (72) ausgestattet ist, wobei in Abhängigkeit der Winkelposition der Drehwelle (70) das Nockenelement (72) dazu eingerichtet ist, mit dem Rahmen (36) so zusammenzuwirken, dass dessen wahlweise Neigung gestattet ist.

9. Einrichtung nach einem der vorangehenden Ansprüche, **dadurch gekennzeichnet, dass** der Rahmen (36) über Gelenkmittel (38) gelenkig mit dem Bodenteil (34) verbunden ist.

10. Einrichtung nach Anspruch 7 und 8, **dadurch gekennzeichnet, dass** wenigstens die Antriebswelle (56) des mit der Waschkammer (14) gekoppelten Kettenantriebsmittels (22) mit einem universellen Verbindungselement (60) ausgestattet ist, das die wahlweise Neigung des Rahmens (36) gestattet.

## Revendications

1. Appareil pour laver des objets à roulettes (12) dotés de roulettes (48) comprenant une chambre de lavage (14), au moins deux guides (28, 30, 44, 46) sensiblement parallèles entre eux sur lesquels lesdites roulettes (48) desdits objets à roulettes (12) peuvent être déposées, et des moyens de déplacement à chaîne (20, 22, 24) prévus avec des éléments d'alimentation (62, 64), associés à au moins l'un desdits guides (28, 30, 44, 46) afin d'insérer sélectivement lesdits objets à roulettes (12) de l'extérieur vers ladite chambre de lavage (14) ou d'extraire lesdits objets à roulettes (12) de ladite chambre de lavage (14) vers l'extérieur, dans lequel lesdits moyens de déplacement à chaîne (22) associés à ladite chambre de lavage (14) comprennent un châssis (36) pouvant supporter au moins lesdits guides (44, 46) et lesdits éléments d'alimentation (62, 64), **caractérisé en ce que** ledit châssis peut être sélectivement incliné par rapport à une base (34) de ladite chambre de lavage (14), afin de permettre à un liquide de lavage de s'évacuer au moins dudit objet à roulettes (12) vers ladite base (34), et **en ce que** lesdits éléments d'alimentation (62, 64) peuvent être en contact avec lesdites roulettes (48) desdits objets à roulettes (12).

2. Appareil selon la revendication 1, **caractérisé en ce que** chacun desdits guides (28, 30, 44, 46) est défini par une paire respective de panneaux latéraux longitudinaux (26, 42).

3. Appareil selon la revendication 2, **caractérisé en ce que** la distance entre les panneaux latéraux longitudinaux d'un premier desdits guides (28, 44) est supérieure à la distance entre les panneaux latéraux longitudinaux d'un deuxième desdits guides (30, 46).

4. Appareil selon la revendication 2 ou 3, **caractérisé en ce que** lesdits moyens de déplacement à chaîne (20, 22, 24) comprennent une pluralité de chaînes (52), dont chacune est associée à un panneau latéral longitudinal (26, 42) respectif.

5. Appareil selon la revendication 4, **caractérisé en ce que** lesdits éléments d'alimentation (62, 64) sont montés sur des paires respectives de chaînes (52).

6. Appareil selon l'une quelconque des revendications précédentes, **caractérisé en ce que** lesdits éléments d'alimentation comprennent des barres (62, 64) disposées dans une direction sensiblement orthogonale à une direction d'alimentation desdits objets à roulettes (12).

7. Appareil selon la revendication 4 ou 5, **caractérisé en ce que** lesdits moyens de déplacement à chaîne (20, 22, 24) comprennent au moins un moteur (54) raccordé de manière cinématique, au moyen d'un arbre d'entraînement (56), auxdites chaînes (52).

8. Appareil selon l'une quelconque des revendications précédentes, **caractérisé en ce qu'**il comprend également un dispositif d'inclinaison (66) prévu avec au moins un arbre rotatif (70) et avec un élément de came (72), monté sur ledit arbre rotatif (70), dans lequel, selon la position angulaire dudit arbre rotatif (70), ledit élément de came (72) peut coopérer avec ledit châssis (36) afin de permettre son inclinaison sélective.

9. Appareil selon l'une quelconque des revendications précédentes, **caractérisé en ce que** ledit châssis (36) est articulé par rapport à ladite base (34) par des moyens de charnière (38).

10. Appareil selon les revendications 7 et 8, **caractérisé en ce qu'**au moins l'arbre d'entraînement (56) desdits moyens de déplacement à chaîne (22) associés à ladite chambre de lavage (14), est prévu avec un élément de joint universel (60), qui permet l'inclinaison sélective dudit châssis (36).
